# EUROPÄISCHE PATENTANMELDUNG

(11) **EP 0 545 244 A1**
(43) Veröffentlichungstag der Anmeldung: **09.06.1993**
(21) Anmeldenummer: 92120054.9
(22) Anmeldetag: 25.11.1992
(51) Int. Cl.: G01P 21/00, G01D 1/00

(54) **Elektronische Transportüberwachungseinrichtung**

(30) Priorität: 02.12.1991 DE 4139728
(71) Anmelder: SMT & HYBRID GmbH, D-01069 Dresden (DE)
(72) Erfinder: Riedel, Wolfgang, Dr.-Ing., O-8046 Dresden (DE); Bönisch, Bert, Dipl.-Ing., O-8029 Dresden (DE)
(74) Vertreter: Uhlemann, Henry, Dipl.-Chem.

(57) **Zusammenfassung**

Die Erfindung betrifft eine elektronische Transportüberwachungseinrichtung zur Registrierung von Schock- und Stoßbelastungen bei bewegten Gütern, welche über einen längeren Zeitraum netzunabhängig und automatisch arbeitet sowie Meßwerte exakt ermittelt, bewertet und verlustsicher abspeichert.

Die elektronische Transportüberwachungseinrichtung besteht aus Meßwertaufnehmer, A/D-Wandler, Mikroprozessor, Meßwertspeicher, Schnittstelle und Stromversorgungseinheit. Dabei ist zwischen Meßwertaufnehmer und Mikroprozessor 17 eine Schwellwertüberwachung geschaltet. Mit der erfindungsgemäßen Transportüberwachungseinrichtung wird erreicht, daß die mit den Meßwertaufnehmern erfaßten Meßsignale mittels einer Schwellwertüberwachungsschaltung ständig auf die Überschreitung eines Signalpegels in positiver und negativer Richtung überprüft werden und das Ansprechen dieser Überwachung ein Signal erzeugt, das einem A/D-Wandler und einen nachgeschalteten Prozessor aus einem energiearmen Ruhezustand aktiviert, so daß nahezu ohne Zeitverzögerung mit der Signalabtastung, ihrer A/D-Wandlung und Verarbeitung der digitalen Abtastwerte im Prozessor begonnen werden kann, bis das Ausgangssignal der Schwellwertüberwachung wieder inaktiv wird.

## Beschreibung

Die Erfindung betrifft eine elektronische Transportüberwachungseinrichtung zur Registrierung von Schock- und Stoßbelastungen bei bewegten Gütern.

Bekannt sind Meßwerterfassungs- und -speichergeräte, die Informationen mehrerer Sensoren elektronisch bewerten und speichern. Nach Abruf können die gespeicherten Daten ereignis- oder zeitorientiert dargestellt werden. Dabei erfolgt die meßtechnische Bewertung zu vorgegebenen Zeiten oder Intervallen. Das DE-GM 87 10 236 beschreibt in diesem Zusammenhang ein Gerät zur Erfassung und Speicherung von Meßwerten, welches unterschiedlichste analoge und digitale Signale über entsprechende Meßfühler erfaßt und mittels eines Mikroprozessors netzunabhängig verarbeiten und speichern kann. Für bisher bekannte Datenerfassungsgeräte, die im wesentlichen aus Meßwerterfassung, A/D-Wandler, Mikroprozessor, Meßwertspeicher, Schnittstelle und Stromversorgungseinheit bestehen, bedeutet das, daß die gesamte Schaltung einschließlich Mikroprozessor sich in ständiger Betriebsbereitschaft befinden müssen und einen permanenten Stromverbrauch bedingen. Damit verbunden ist eine verkürzte Betriebszeit, was sich gerade im Transportbereich nachteilig auswirkt. Weiterhin ist die Speicherkapazität bekannter Meßwerterfassungs- und Speichergeräte begrenzt, was bei der Vielzahl von zu verarbeitenden Informationen die Betriebszeit zusätzlich einschränkt.

Aufgabe der Erfindung ist es daher, eine elektronische Transportüberwachungseinrichtung nach dem Oberbegriff des 1. Anspruches zu schaffen, welche über einen längeren Zeitraum netzunabhängig und automatisch arbeitet sowie Meßwerte exakt ermittelt, bewertet und verlustsicher abspeichert.

Erfindungsgemäß wird diese Aufgabe durch die im Kennzeichen des 1. Anspruches genannten Merkmale gelöst.

Weitere Ausgestaltungen der Erfindung sind den Unteransprüchen sowie dem Ausführungsbeispiel zu entnehmen.

Mit der Erfindung wird erreicht, daß die mit den Meßwertaufnehmern erfaßten Meßsignale mittels einer Schwellwertüberwachungsschaltung ständig auf die Überschreitung eines Signalpegels in positiver und negativer Richtung überprüft werden und das Ansprechen dieser Überwachung ein Signal erzeugt, das einem A/D-Wandler und einen nachgeschalteten Prozessor aus einem energiearmen Ruhezustand aktiviert, so daß nahezu ohne Zeitverzögerung mit der Signalabtastung, ihrer A/D-Wandlung und Verarbeitung der digitalen Abtastwerte im Prozessor begonnen werden kann, bis das Ausgangssignal der Schwellwertüberwachung wieder inaktiv wird.

Die Ausgestaltung der Schwellwertüberwachung ermöglicht dabei die Aktivierung und Deaktivierung der über den Mikroprozessor gesteuerten Meßwertaufnehmer.

Anhand nachfolgendem Ausführungsbeispiel wird die Erfindung näher erläutert.

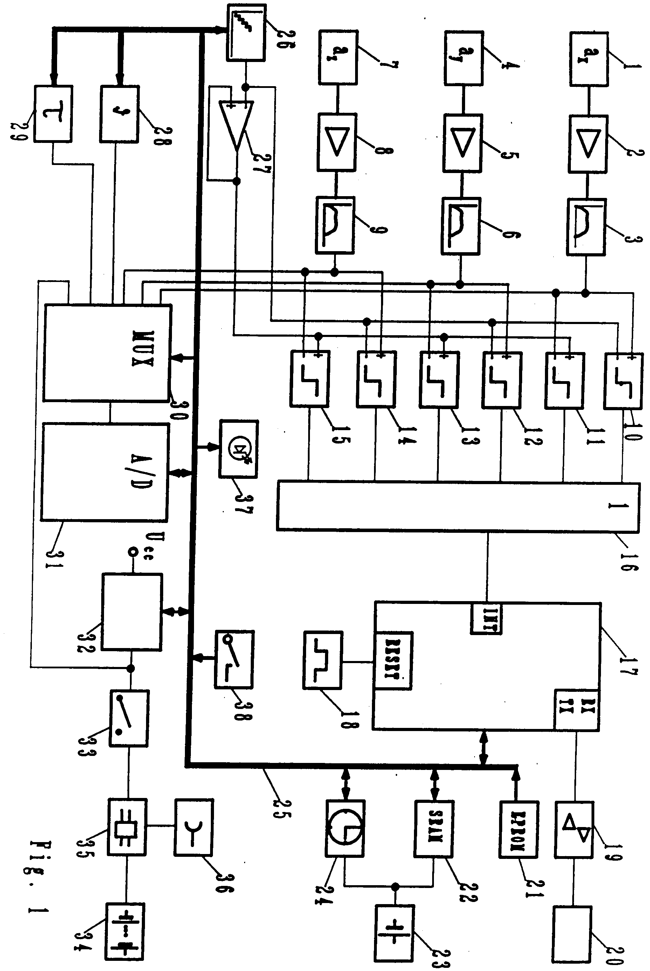

Die zugehörige Fig. 1 zeigt dabei eine Schaltungsübersicht der erfindungsgemäßen Transportüberwachungseinrichtung.

Dabei besteht die Transportüberwachungseinrichtung aus Meßwertaufnehmern, A/D-Wandler, Mikroprozessor, Meßwertspeicher, Schnittstelle und Stromversorgungseinheit zur Registrierung von Schock- und Stoßbelastungen.

Die Meßwertaufnehmer sind aus 3 in den kartesischen Raumachsen angeordneten Beschleunigungssensoren 1, 4, 7, diesen zugeordneten Spannungsverstärkern 2, 5, 8 und Bandpässen 3, 6, 9 aufgebaut, wobei die Beschleunigungssensoren 1, 4, 7 vorzugsweise als piezoelektrische Aufnehmer ausgeführt sind, die keine Hilfsenergie benötigen und deren von Temperaturänderungen über den pyroelektrischen Effekt hervorgerufene Störsignale durch die Bandpässe 3, 6, 9 unterdrückt werden. Mit Hilfe der Bandpässe 3, 6, 9 werden weiterhin sehr kurze und damit wenig wirksame Beschleunigungsereignisse und andererseits statische Beschleunigungen, wie zum Beispiel die Erdbeschleunigung ausfiltriert und damit einer Meßwerterfassung entzogen, was ebenfalls mit einer Einsparung von Energie und Speicherplätzen verbunden ist.

Zwischen Meßwerterfassung und Mikroprozessor 17 ist eine Schwellwertüberwachung geschaltet, die mit dem Interrupt- bzw. über einen Watchdog 18 mit dem Reset-Eingang des Mikroprozessor 17 in Verbindung steht und aus Schwellspannungsgenerator 26, Inverter 27, Spannungskomparatoren 10...15 und einem ODER-Gatter 16 besteht. Dabei sind die Spannungskomparatoren 10, 12, 14 eingangsseitig mit ihrem nichtinvertierenden Eingang jeweils mit einem Meßwertaufnehmer und mit ihrem invertierenden Eingang gemeinsam mit dem Schwellspannungsgenerator 26 und die Spannungskomparatoren 11, 13, 15 mit ihrem nichtinvertierenden Eingang gemeinsam mit dem, dem Schwellspannungsgenerator 26 nachgeschalteten Inverter 27 und mit ihrem invertierenden Eingang jeweils mit einem Aufnehmer verbunden. Die Spannungskomparatoren 10...15 sind ausgangsseitig dem ODER-Gatter 16 zugeordnet , das über den Interrupt-Eingang bzw. über den Watchdog 18 zum Reset-Eingang die Verbindung zum Mikroprozessor 17 herstellt. Dabei wird das Signal der Schwellwertüberwachung entweder über den Interrupt-Eingang oder über einen durch den Watchdog 18 erzeugten Reset genutzt, um den Mikroprozessor 17 aus dem Ruhezustand zu aktivieren. Das inaktive Signal stellt den Ruhezustand wieder her.

Vorzugsweise ist das ODER-Gatter 16 durch Einsatz von Komparatoren mit open collector-Ausgängen als wired or ausgebildet.

Über einen Bus 25 ist der Mikroprozessor 17 mit einem EPROM 21, zusätzlichen Meßwertaufnehmern 28, 29, dem Multiplexer 30, mit einem SRAM 22, einem Zeitgeber 24 mit Interrupterzeugung, einem A/D-Wandler 31 und einer Stromversorgungseinheit 32 verbunden. Zweckmäßigerweise sind der SRAM 22 und der Zeitgeber 24 über eine gesonderte Batterie 23 gepuffert. Dadurch kann deren Funktion auch bei ausgeschaltetem Gerät während der gesamten für das Gerät vorgesehenen Nutzungsdauer erhalten bleiben, was mit einer Erhöhung der Datensicherheit verbunden ist.

Zusätzlich zu den Meßwertaufnehmern zur Erfassung von Schock- und Stoßbelastungen sind weitere Meßwertaufnehmer 28, 29 angeordnet, die über den Datenbus 25 mit dem Mikroprozessor 17 verbunden sind und über die Verbindungsleitung zum Multiplexer 30 die Meßwertaufnahme über den A/D-Wandler 31 gestatten. Mit Hilfe dieser zusätzlichen Meßwertaufnehmer, in Fig. 1 als Temperatur- und Feuchtemeßwertaufnehmer dargestellt, können zu den unmittelbar zu bestimmenden Schock- und Stoßbelastungen weitere aktuelle Umgebungsdaten erfaßt werden.

Der Multiplexer 30 fragt die Zustände der verschiedenen Signale, herrührend von den Beschleunigungssensoren 1, 4, 7 sowie den zusätzlichen Meßwertaufnehmern 28, 29 nacheinander ab und schaltet diese über seinen Ausgang auf den A/D-Wandler 31. Dabei werden die zusätzlichen Meßwertaufnehmer 28, 29 vom Mikroprozessor 17 über den Datenbus 25 nur für eine kurze Erfassungszelt in programmäßig vorgesehenen Intervallen oder zu festen Zeitpunkten aktiviert und die Meßwertsignale über Multiplexer 30, A/D-Wandler 31 und Mikroprozessor 17 gemeinsam mit den gemessenen Beschleunigungswerten im SRAM 22 abgelegt. Außerhalb dieser Erfassungszeit befinden sich diese zusätzlichen Meßwertaufnehmer 28, 29 in einem inaktivem, keine Energie verbrauchenden Zustand.

Mit dem Mikroprozessor 17 ist eine Schnittstelle , bestehend aus Treiber/Empfänger 19 und Anschlußbuchse 20, verbunden. Über diese Anschlußmöglichkeit kann ein externer PC angeschlossen werden, der die gespeicherten Meßwerte abfragt und über den der im SRAM 22 gespeicherte Programmablauf den jeweiligen Untersuchungsbedingungen angepaßt werden kann. Über entsprechend auswählbare Programmvarianten ist es möglich, den vorgegebenen Speicherinhalt zu füllen, anschließend die weitere Registrierung abzubrechen oder bei Überschreitung des Speicherinhaltes die ältesten Meßdaten mit den neuesten zu überschreiben oder nur die kleinsten Meßdaten mit neuen zu überschreiben, wenn diese größer sind als die zu überschreibenden sind.

Die Digitalisierung der von den Beschleunigungssensoren 1, 4, 7 bereitgestellten Signale erfolgt bei aktivem Signal der Schwellwertüberwachung mit ca. 10 kHz. Die über die Bandpässe vorverarbeiteten Signale werden nach Erreichen vorgebbarer Pegel als richtungsbehaftete Größtwerte der Beschleunigung für alle 3 Achsen, einschließlich deren zeitlichen Verlauf zusammen mit Datum und Uhrzeit als Beschleunigungsereignis im SRAM-Speicher abgelegt.

Für die Erzeugung der zum Betrieb der Meßwerteinrichtungen notwendigen negativen Betriebsspannung wird vorzugsweise eine vom Mikroprozessor 17 erzeugte positive Impulsfolge genutzt, indem diese einem Kondensator und einer Klemmdiode zur Potentialverschiebung und einer Einweggleichrichtung mit Ladekondensator zugeführt wird.

Bedingt durch die Datenbusverbindung 25 des Mikroprozessors 17 zur Stromversorgungseinheit 32 und die Verbindung des Muitiplexers 30 und des A/D-Wandlers 31 mit der Stromversorgungseinheit 32 kann vom Mikroprozessor 17 über einen internen Reststundenzähler die Spannung der Energiequellen nach jeder Datenspeicherung überwacht werden, so daß bei Unterschreitung der Mindestbetriebsspannung die Transportüberwachungseinrichtung über die Stromversorgungseinrichtung 32 definiert abgeschaltet wird. Damit werden Fehlfunktionen vermieden und anderseits der Erhalt bereits gespeicherter Meßwerte gesichert.

Als Energiequelle 34 , die über einen Schalter 33 und eine Steckverbindung 35 in Verbindung mit der Stromversorgungseinheit 32 steht, können sowohl ein Akku-Pack als auch Lithiumbatterien mit einer längeren Betriebsdauer benutzt werden. Dabei wird durch den Steckverbinder 35 sowohl eine Verbindung zum Geräteschalter 33 als auch zur Ladebuchse 36 hergestellt, wenn als Stromversorgungseinrichtung ein Akku-Pack angeschlossen ist. Bei Einsatz einer Lithiumbatterie wird deren stromführende Verbindung zur Ladebuchse 36 verhindert. Bei beiden Batterievarianten wird dem Reststundenzähler im Mikroprozessor 17 über den Bus 25 die maximal verfügbare Gangreserve mitgeteilt.

Über die Kontrolltaste 38 wird die Zustandsanzeige 37, bestehend aus farbigen Leuchtdioden, aktiviert, die vor Ort, ohne Anschluß eines PC an die Schnittstelle 20, Auskunft über verschiedene Zustände der Transportüberwachungseinrichtung gibt .

## Patentansprüche

1. Elektronische Transportüberwachungseinrichtung bestehend aus Meßwertaufnehmer, A/D-Wandler, Mikroprozessor, Meßwertspeicher, Schnittstelle und Stromversorgungseinheit zur Registrierung von Schock- und Stoßbelastungen, dadurch gekennzeichnet, daß zwischen Meßwertaufnehmer und Mikroprozessor (17) eine Schwellwertüberwachung geschaltet ist, die mit dem Interrupt- bzw. über einen Watchdog (18) mit dem Reset-Eingang des Mikroprozessor (17) in Verbindung steht, daß die Meßwertaufnehmer aus mehreren Meßwertsensoren (1, 4, 7) zur Erfassung von Schock- und Stoßbelastungen und diesen zugeordneten Spannungsverstärkern mit nachgeschalteten Bandpässen (3, 6, 9) bestehen, daß ein Multiplexer (30) eingangsseitig mit den Meßwertaufnehmern und ausgangsseitig mit einem A/D-Wandler (31) in Verbindung steht und daß der Mikroprozessor (17) über einen Datenbus (25) mit einem EPROM (21), dem Muitiplexer (30), einem SRAM (22), einem Zeitgeber (24) mit Interrupterzeugung, einem A/D-Wandler (31) und einer Stromversorgungseinheit (32) verbunden ist.

2. Elektronische Transportüberwachungseinrichtung nach Anspruch 1, dadurch gekennzeichnet, daß die Schwellwertüberwachung aus einem Schwellspannungsgenerator (26), einem Inverter (27), Spannungskomparatoren (10...15) und einem ODER-Gatter (16) besteht, wobei die Spannungskomparatoren (10, 12, 14) eingangsseitig mit ihrem nichtinvertierenden Eingang jeweils mit einem Meßwertaufnehmer und mit ihrem invertierenden Eingang gemeinsam mit dem Schwellspannungsgenerator (26) und die Spannungskomparatoren (11, 13, 15) mit ihrem nichtinvertierenden Eingang gemeinsam mit dem, dem Schwellspannungsgenerator (26) nachgeschalteten Inverter (27) und mit ihrem invertierenden Eingang jeweils mit einem Aufnehmer verbunden sind und die Spannungskomparatoren (10...15) ausgangsseitig dem ODER-Gatter (16) zugeordnet sind, das über den Interrupt-Eingang bzw. über den Watchdog (18) zum Reset-Eingang die Verbindung zum Mikroprozessor (17) herstellt.

3. Elektronische Transportüberwachungseinrichtung nach Anspruch 1, dadurch gekennzeichnet, daß die Meßwertaufnehmer aus 3 in den kartesischen Raumachsen angeordneten Beschleunigungssensoren (1, 4, 7), diesen zugeordneten Spannungsverstärkern (2, 5, 8) und Bandpässen (3, 6, 9) bestehen, wobei die Beschleunigungssensoren (1, 4, 7) vorzugsweise als piezoelektrische Aufnehmer ausgeführt sind, deren pyroelektrische Störsignale durch die nachgeschalteten Bandpässe (3, 6, 9) unterdrückt werden.

4. Elektronische Transportüberwachungseinrichtung nach Anspruch 1, dadurch gekennzeichnet, daß zusätzlich zu den Meßwertaufnehmern zur Erfassung von Schock- und Stoßbelastungen weitere Meßwertaufnehmer (28, 29), die über den Datenbus (25) mit dem Mikroprozessor (17) verbunden und über die Verbindungsleitung zum Multiplexer (30) die Meßwertaufnahme über den A/D-Wandler (31) gestatten, vorgesehen sind.

5. Elektronische Transportüberwachungseinrichtung nach Anspruch 1, dadurch gekennzeichnet, daß dem SRAM (22) und dem Zeitgeber (24) eine gesonderte Batterie (23) zum Funktionserhalt zugeordnet sind.

6. Elektronische Transportüberwachungseinrichtung nach Anspruch 1 und 4, dadurch gekennzeichnet, daß als zusätzliche Meßwerteinrichtungen (28, 29) vorzugsweise Temperatur- und Feuchtemeßeinrichtungen der Transportüberwachungseinrichtung zugeordnet werden.

7. Elektronische Transportüberwachungseinrichtung nach Anspruch 1, dadurch gekennzeichnet, daß für die Erzeugung der zum Betrieb der Meßwerteinrichtungen notwendigen negativen Betriebsspannung vorzugsweise eine vom Mikroprozessor (17) erzeugte positive Impulsfolge genutzt wird derart, daß die Impulse über einen Kondensator und eine Klemmdiode zur Potentialverschiebung und einer Einweggleichrichtung mit Ladekondensator zugeführt werden.

8. Elektronische Transportüberwachungseinrichtung nach Anspruch 1, dadurch gekennzeichnet, daß als Energiequelle (34) sowohl ein Akku-Pack als auch Lithiumbatterien einsetzbar sind, wobei durch einen Steckverbinder (35) die Verbindung vom Akku-Pack (34) über einen Geräteschalter (33) zur Stromversorgungseinrichtung (32) und zu einer Ladebuchse (36) hergestellt wird, während bei Einsatz einer Lithiumbatterie über den Geräteschalter (33) nur die Verbindung zur Stromversorgungseinrichtung (32) gewährleistet ist.

9. Elektronische Transportüberwachungseinrichtung nach Anspruch 1, dadurch gekennzeichnet, daß die Stromversorgungseinrichtung (32) über den Datenbus (25) eine Verbindung zu einem Reststundenzähler im Mikroprozessor (17) aufweist und damit gleichzeitig eine interne Abschaltmöglichkeit bei Spannungsabfall gegeben ist.

10. Elektronische Transportüberwachungseinrichtung nach Anspruch 1, dadurch gekennzeichnet, daß das ODER-Gatter (16) durch Einsatz von Komparatoren mit open collector-Ausgängen als wired or ausgebildet ist.

11. Elektronische Transportüberwachungseinrichtung nach Anspruch 1, dadurch gekennzeichnet, daß eine Kontrolltaste (38) über den Datenbus (25) und den Mikroprozessor (17) eine aus LED's bestehende Zustandsandsanzeige (37) aktiviert.
